# EUROPEAN PATENT APPLICATION

(11) **EP 2 077 687 A1**
(43) Date of publication of application: **08.07.2009**
(21) Application number: 09250011.5
(22) Date of filing: 05.01.2009
(51) Int. Cl.: H04W 28/06

(54) **Method for enhancing layer 2 for a high speed packet access uplink**

(30) Priority: 04.01.2008 IN CH00422008
(71) Applicant: Samsung Electronics Co., Ltd., Suwon-si, Gyeonggi-Do (KR)
(72) Inventor: Lucky, Kundan Kumar, Suwon-si Gyeonggi-do (KR)
(74) Representative: Boakes, Jason Carrington

(57) **Abstract**

A method for enhancing Layer 2 for High Speed Packet Access uplink. The method includes segmenting a Radio Link Control (RLC) Service Data Unit (SDU) into plurality of Medium Access Control (MAC) i/is Packet Data Units (PDUs), a size of which is limited to a Maximum RLC PDU Size (MRPS) and indicating RLC PDUs of the same size by a single Length (L) entry and indicating the RLC PDUs by a (size, number) pair in the L entry..

## Description

### BACKGROUND OF THE INVENTION

### 1. Field of the Invention

The present invention, in general, relates to wireless communication, and particularly to data link layer or layer 2 (L2) in an access stratum of high speed packet access (HSPA) evolution protocol standards, i.e., a method for enhancing L2 for an HSPA uplink.

### 2. Background of the Invention

High speed packet access (HSPA) is a collection of mobile telephony protocols that extend and improve the performance of existing Universal Mobile Telecommunications System (UMTS) protocols. Two of the existing standards, High Speed Downlink Packet Access (HSDPA) and High Speed Uplink Packet Access (HSUPA), increase performance using improved modulation schemes and refining the protocols by which handsets and base stations communicate. In HSPA systems, the data link layer or layer 2 (L2) is responsible for providing reliable data transfer services to the upper layers and applications, e.g., a voice codec application. The L2 mainly includes two sub-layers, i.e., a Radio Link Control (RLC) and a Medium Access Control (MAC). In the HSPA systems, for an Enhanced Dedicated transport CHannel (E-DCH), there are two MAC sub-layers, i.e., MAC-e and MAC-es. The MAC-es exists on top of the MAC-e and receives PDUs directly from the MAC-d. The RLC, MAC-d, and MAC-es entities are located in the RNC, whereas MAC-e is located in the network element Node-B.

The RLC receives the data units, often referred to as RLC Service Data Units (SDUs), from the upper layers (or applications) and segments and/or concatenates the SDUs to create fresh data units, e.g., RLC Packet Data Units (PDUs). The MAC-d transfers the RLC PDUs to the MAC-es as MAC-d PDUs. The MAC-es SDUs, i.e. MAC-d PDUs, of the same size, coming from a particular logical channel are multiplexed together into a single MAC-es payload. Because only one MAC-d PDU size is allowed per logical channel per Transmission Time Interval (TTI), there is only one MAC-es PDU per logical channel per TTI. The MAC-es header is concatenated to the payload. The number of PDUs, as well as the one Data Description Indicator (DDI) value identifying the logical channel, the MAC-d flow, and the MAC-es SDU size are included in the MAC-e header. There are multiple MAC-es PDUs from multiple logical channels, but only one MAC-e PDU is transmitted in a TTI.

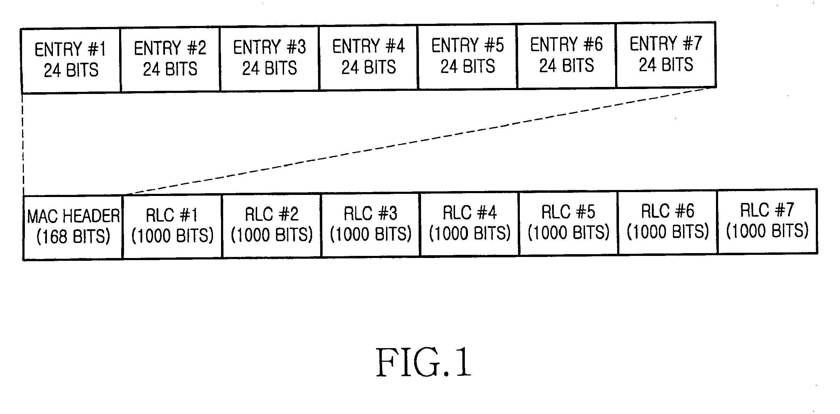

For example, when the size of an RLC SDU is much larger than the Maximum RLC PDU size (MRPS), it is segmented into multiple PDUs of which generally all but the last one is of the size equal to MRPS. For instance, if the MRPS is 1000 bits, assuming an RLC header size of 16 bits, an RLC SDU of 12000 bits (1500 octets), is segmented into 13 RLC PDUs, 12 of 1000 bits and the last one of 208 bits. Assuming a MAC-i PDU size of 7168 bits, exactly 7 RLC PDUs (or MAC-d PDUs) can be fitted into the MAC-i PDU as shown in the FIG. 1.

More specifically, FIG. 1 illustrates an existing MAC-i/is PDU structure. Assuming that a Transmission Sequence Number (TSN) for the first MAC-d PDU is 16 and the data belongs to the Logical CHannel IDentity (LCH-ID) 5, the exact contents of the MAC-i/is header is as shown below in Table 1. It is assumed that Segmentation Indicator SI = '00' indicates inclusion of a complete MAC-d PDU.

**Table 1**

| LCH ID (=5) | | | | TSN (16-22) | | | | | | SI | | LENGTH (L) (=1000) | | | | | | | | | | | F |
|---|---|---|---|---|---|---|---|---|---|---|---|---|---|---|---|---|---|---|---|---|---|---|---|
| 0 | 1 | 0 | 1 | 0 | 1 | 0 | 0 | 0 | 0 | 0 | 0 | 0 | 1 | 1 | 1 | 1 | 1 | 0 | 1 | 0 | 0 | 0 | 0 |
| 0 | 1 | 0 | 1 | 0 | 1 | 0 | 0 | 0 | 1 | 0 | 0 | 0 | 1 | 1 | 1 | 1 | 1 | 0 | 1 | 0 | 0 | 0 | 0 |
| 0 | 1 | 0 | 1 | 0 | 1 | 0 | 0 | 1 | 0 | 0 | 0 | 0 | 1 | 1 | 1 | 1 | 1 | 0 | 1 | 0 | 0 | 0 | 0 |
| 0 | 1 | 0 | 1 | 0 | 1 | 0 | 0 | 1 | 1 | 0 | 0 | 0 | 1 | 1 | 1 | 1 | 1 | 0 | 1 | 0 | 0 | 0 | 0 |
| 0 | 1 | 0 | 1 | 0 | 1 | 0 | 0 | 1 | 0 | 0 | 0 | 0 | 1 | 1 | 1 | 1 | 1 | 0 | 1 | 0 | 0 | 0 | 0 |
| 0 | 1 | 0 | 1 | 0 | 1 | 0 | 1 | 0 | 0 | 0 | 0 | 0 | 1 | 1 | 1 | 1 | 1 | 0 | 1 | 0 | 0 | 0 | 0 |
| 0 | 1 | 0 | 1 | 0 | 1 | 0 | 1 | 0 | 1 | 0 | 0 | 0 | 1 | 1 | 1 | 1 | 1 | 0 | 1 | 0 | 0 | 0 | 0 |
| 0 | 1 | 0 | 1 | 0 | 1 | 0 | 1 | 1 | 0 | 0 | 0 | 0 | 1 | 1 | 1 | 1 | 1 | 0 | 1 | 0 | 0 | 0 | 1 |

It can be noted that the same values of the LCH ID, SI, and L fields are unnecessarily repeated in all the MAC-i/is header entries and the values of the TSN fields in the consecutive entries are in increasing sequence. Consequently, a large amount of space is consumed by the MAC-i/is header entries following the first one, without conveying any significant incremental information. The total waste of space can be calculated as 24*6/7168 ∼ 2%, which results in a significant loss in bandwidth.

Currently, in the state of art, the MAC segmentation and optimization are performed through various entries such as LCH-ID, TSN, L, SI, etc., in the MAC-i/is header. The segmentation and optimization is performed on RLC SDU and thus, results in many MAC i/is PDUs. In the MAC i/is header repetition of LCH-ID, SI, and L fields increases header overhead. The sizes of the RLC PDUs are dependent on the MRPS. The network commonly defines a set of MRPS, and a User Equipment (UE) selects an MRPS from the set of MRPS provided by the network.

Based at least upon the foregoing, a need exists for a method of reducing a MAC header overheads in L2.

### SUMMARY OF THE INVENTION

Accordingly, the present invention has been deigned to solve the above and other problems occurring in the prior art. The present invention provides a method of reducing a MAC header overhead in L2 by avoiding unnecessary repetition of header entries and thus to improve the efficiency by setting default value for MRPS.

In accordance with an aspect of the present invention, a method is provided for enhancing L2 for HSPA uplink. The method includes segmenting large sized RLC SDU into plurality of MAC i/is PDUs, the size of which is limited to the Maximum RLC PDU size, and indicating RLC PDUs of same size by a single L entry and indicating the RLC PDUs by a (size, number) pair in the L entry.

Accordingly, the method reduces the header overheads in the L2 by avoiding unnecessary repetition of header entries and the efficiency is improved by setting default value for MRPS and also avoids two sets of configurations for radio-aware and radio-unaware RLC implementations.

### BRIEF DESCRIPTION OF THE DRAWINGS

The above and other aspects, features, and advantages of the present invention will become more apparent from the ensuing detailed description of the invention when taken in conjunction with the accompanying drawings in which:
FIG. 1 illustrates an existing MAC-i/is PDU structure;
FIG. 2 is a conventional architecture of a system network, such as HSPA;
FIG. 3 illustrates fields included in a MAC-i/is header in accordance with an embodiment of the present invention;
FIG. 4 illustrates fields to be included in a MAC-i header in accordance with an embodiment of the present invention;
FIG. 5 illustrates fields to be included in a MAC-is header in accordance with an embodiment of the present invention;
FIG. 6 illustrates a MAC-i PDU including two MAC-is PDUs in accordance with an embodiment of the present invention.
FIG. 7A illustrates an alternative header format for a MAC-i in accordance with an embodiment of the present invention;
FIG. 7B illustrates a header format for a MAC-i in accordance with an embodiment of the present invention;
FIG. 8 illustrates an optimization for the MAC-i/is PDU structure of FIG. 1, in accordance with an embodiment of the present invention;
FIG. 9 illustrates an MAC-i PDU of FIG. 1, in accordance with an embodiment of the present invention; and
FIG. 10 illustrates an MAC-i/is PDU header in accordance with an embodiment of the present invention.

### DETAILED DESCRIPTION OF EMBODIMENTS OF THE INVENTION

Embodiments of the present invention will now be described with reference to the accompanying drawings. It should be understood however that the disclosed embodiments are merely provided for explanation of the present invention, which may be embodied in various other forms. The following description and drawings are not to be construed as limiting the present invention and numerous specific details are described to provide a thorough understanding of the present invention, as the basis for the claims and as a basis for teaching one skilled in the art how to make and/or use the invention. However in certain instances, well-known or conventional details are not as thoroughly described, in order not to obscure the present invention in unnecessary detail.

The enhancements of a data link layer or Layer (L2) for an HSPA uplink is described herein, wherein data transfer over a Enhanced Dedicated transport CHannel (E-DCH) in an overhead efficient manner is described. Also, an optimization for a Medium Access Channel (MAC) header for an HSPA evolution MAC protocol in an uplink is described herein below.

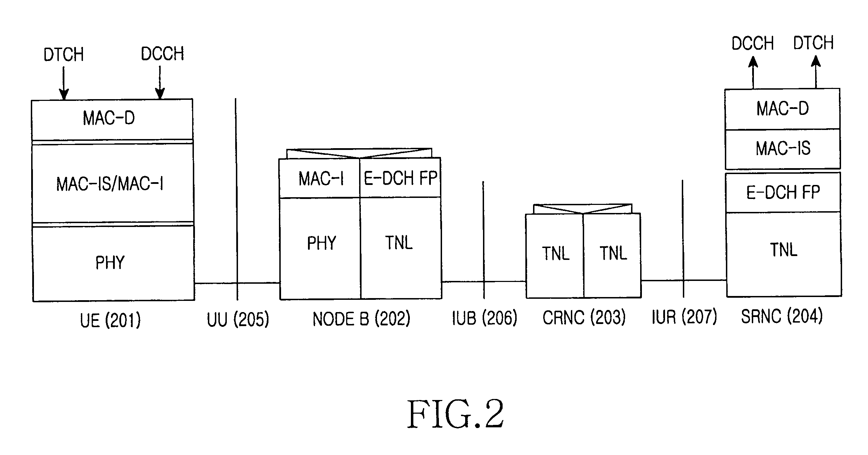

In HSPA evolution systems, the MAC entities handling the data transfer on the E-DCH are referred to as MAC-i and MAC-is, respectively. The arrangement of Radio Link Control (RLC), MAC-d, and MAC-i/is entities in the network together with their corresponding peer entities in the User Equipment (UE) is illustrated in FIG. 2.
More specifically, FIG. 2 illustrates a conventional architecture of a system network, such as HSPA. Referring to FIG. 2, the system includes a communication network communicating with the UE 201 and with external networks. The system includes network elements such as a Node B (base station) 202, and Radio Network Controllers (RNCs), i.e., Controlling RNC (CRNC) 203 and Serving RNC (SRNC) 204. The communication with UE 201 is achieved via a radio interface called a Uu interface 205. The Node B 202 communicates with RNC via a terrestrial interface called lub interface 206, and the RNCs 203 and 204 may communicate via a terrestrial interface called lur interface 207. An RNC that controls a given Node B is referred to as a CRNC, which controls load and radio resource allocation for the Node B. A SRNC controls communication for a given UE.

The restriction of having a fixed size RLC Acknowledged Mode (AM) PDU has been done away with. Therefore, RLC PDUs can be of flexible size in an AM. To handle these variable sized RLC PDUs, MAC segmentation has been introduced in HSPA evolution systems for the E-DCH. It is possible that neither segmentation nor concatenation is performed on an RLC SDU (or SDUs). RLC PDUs are also of flexible size, but cannot be larger than a specified limit, i.e., a Maximum RLC PDU Size (MRPS). The RLC PDUs are submitted to a MAC-d, which in turn submits them to MAC-is where they are referred to as MAC-d PDUs. MAC-d PDUs of the different sizes, but all coming from a particular logical channel, are multiplexed together into a single MAC-is payload.

Further, the MAC-is payload and the MAC-is header are included in the MAC-is PDU. Depending upon the determined amount of data, the MAC-i can transmit multiple MAC-is PDUs in a single TTI. These MAC-is PDUs together with the MAC-i header constitute the MAC-i PDU. It is also possible that either a MAC-d PDU cannot be completely accommodated in the MAC-is PDU or some space is still available, even after including a number of complete MAC-d PDUs. In such case, a part of the MAC-d PDU is included in the MAC-is PDU. Therefore, any possible combination of data blocks can be included in a MAC-is PDU where the first and the last data blocks can be partial MAC-d PDUs and the rest can be complete MAC-d PDUs. All these partial or complete MAC-d PDUs included in a MAC-is PDU are referred to as MAC-is SDUs in the description. It is important that the RLC PDUs belonging to different RLC entities are delivered to their corresponding RLC entities. Therefore, an identifier for the RLC entity, called as an LCH-ID, is added in the MAC-i/is header for each MAC-is SDU. As an optimization, a group of MAC-is SDUs belonging to a single logical channel can be identified by a single LCH-ID field.

Assuming that the MAC-is PDUs are received, the MAC-is PDUs are reordered before submitting the contained MAC-d PDUs to MAC-d. Therefore, to enable re-ordering, a TSN is added in the MAC-i/is header for each MAC-is SDU. As an optimization, a group of MAC-is SDUs belonging to a single logical channel can have a single TSN.

With every complete or partial MAC-d PDU in the MAC-is PDU, there should be an indication of whether the included part is a complete MAC-d PDU or a first, last, or continuing segment. Therefore, a segmentation indicator should also be added in the MAC-i/is header for every MAC-is SDU. As an optimization, a group of MAC-is SDUs belonging to a single logical channel can have a single SI.

Length of MAC-is SDUs should also be indicated in the MAC-i/is header. As an optimization, a group of MAC-is SDUs can have a single length field.

Accordingly, as described above, some important fields of a MAC-i/is header entry include an LCH-ID, a TSN, an L, and an SI. There are many such entries in a MAC-i/is header, one each for every included MAC-is SDU. The complete MAC-i/is header is nothing but a concatenation of all such entries. The length, typical length, and the assumed lengths of the fields are as shown in Tables 2 and 3 below.

**Table 2**

| Name of the Field | LCH-ID | TSN |
|---|---|---|
| Length (in bits) | 4 | 6 |

**Table 3**

| Name of the Field | L | SI | F |
|---|---|---|---|
| Typical Length (in bits) | 10-11 | 1-2 | 1 |
| Assumed Length (in bits) | 11 | 2 | 1 |

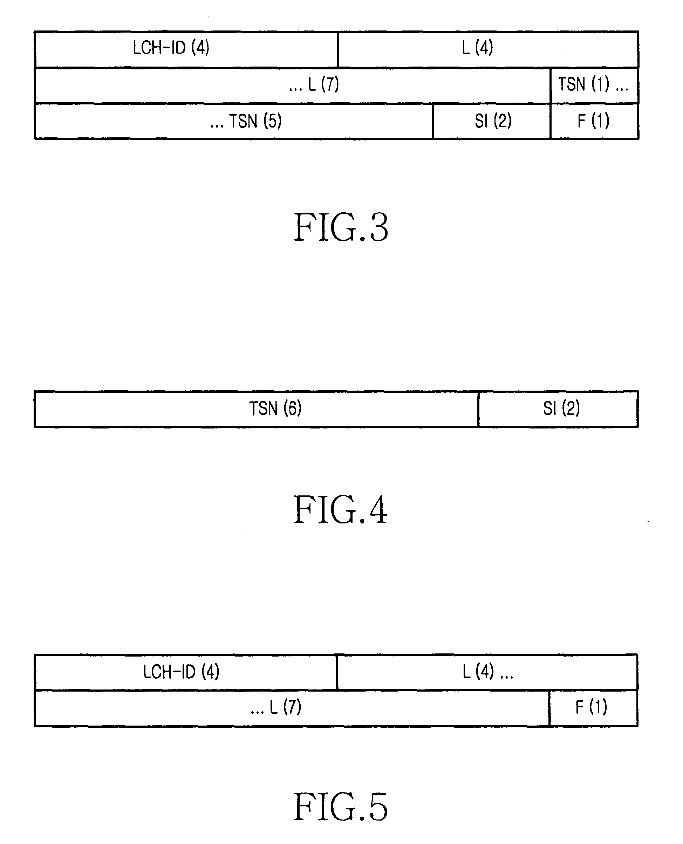

FIG. 3 illustrates proposed fields to be included in a MAC-i/is header in accordance with an embodiment of the present invention. The MAC-i/is header can include a four bit Logical CHannel IDentity (LCH-ID), a four and seven bit length indicating the length of MAC-i/is SDU, a one and five bit Transmission Sequence Number (TSN), a two bit Segmentation Indicator (SI) and a header continuation flag (F). The field F can be interpreted as, if F is set to '0', the field F is followed by LCD-ID and L fields, and if F is set to '1' then, the field F is followed by a MAC-is PDU, wherein the MAC-is PDU starts with the TSN and SI fields. It is to be noted that a single SI field and TSN field can be used for all the MAC-is SDUs belonging to a single LCH included in a MAC-i PDU in a Transmission Time Interval (TTI) and the definition of the SI field can follow the pattern used for MAC-ehs in the downlink. The SI field can indicate if the MAC-is SDUs are complete MAC-d PDUs, or segments thereof, or a combination of both as shown in Table 4 below.

**Table 4**

| SI Field | Segmentation indication |
|---|---|
| 00 | The first MAC-is SDU of the MAC-is PDU is a complete MAC-d PDU. The last MAC-is SDU of the MAC-is PDU is a complete MAC-d PDU. |
| 01 | If there is more than one MAC-is SDUs in the MAC-is PDU, the last MAC-is SDU of the MAC-is PDU is a complete MAC-d PDU. The first MAC-is SDU of the MAC-is PDU is the last segment of a MAC-d PDU. |
| 10 | If there is more than one MAC-is SDUs in the MAC-is PDU, the first MAC-is SDU of the MAC-is PDU is a complete MAC-d PDU. The last MAC-is SDU of the MAC-is PDU is the first segment of a MAC-d PDU. |
| 11 | If there is more than one MAC-is SDUs in the MAC-is PDU, the first MAC-is SDU of the MAC-is PDU is the last segment of a MAC-d PDU and the last MAC-is SDU of MAC-is PDU is the first segment of a MAC-d PDU. |
| | If there is only one MAC-is SDU in the MAC-is PDU, the MAC-is SDU is a middle segment of a MAC-d PDU. |

FIG. 4 illustrates fields to be included in a MAC-is header in accordance with an embodiment of the present invention. The MAC-is header can include a six bit TSN and a two bit SI. It is noted that there can be at least one MAC-is PDU per logical channel per TTI and the LCH-ID and the L fields can be repeated for each MAC-is SDU.

FIG. 5 illustrates fields to be included in a MAC-i header in accordance with an embodiment the present invention. The MAC-i header can include a four bit LCH-ID, a four and seven bit length indicating the length of MAC-i SDU, and a header continuation flag (F).

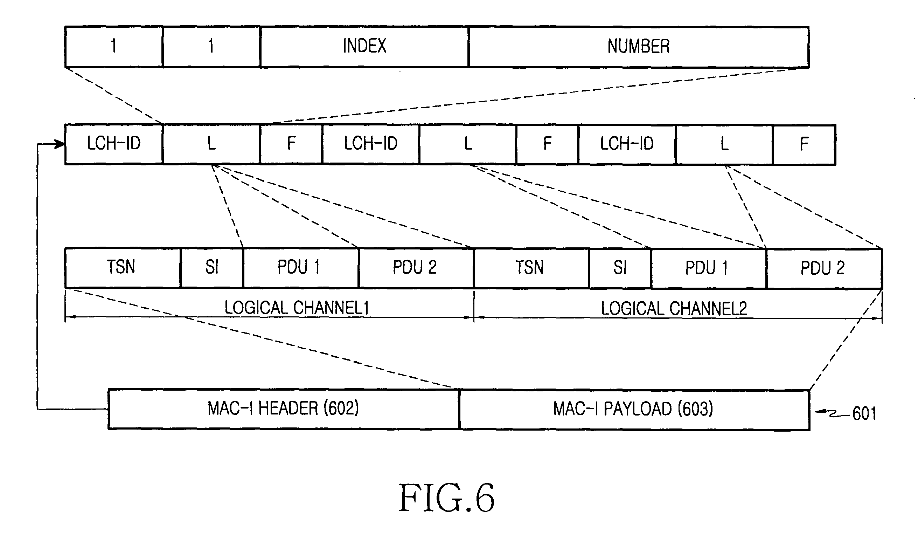

FIG. 6 illustrates a MAC-i PDU in accordance with an embodiment of the present invention. Referring to FIG. 6, two MAC-is PDUs are coupled together to form a single MAC-i PDU 601. The MAC-i PDU includes a MAC-i header 602 and a MAC-i payload 603. The MAC-i header 602 includes an LCH-ID field and the MAC-i payload 603 includes two MAC-is PDUs, called logical channels, i.e., Logical Channel 1 and Logical Channel 2. Both the logical channels include TSN, SI, PDU 1, and PDU 2 fields as illustrated in Figure 6. Further, the field L can be used as an (index, number) pair if multiple MAC-is SDUs of the same size belonging to the same logical channel are included in the MAC-i PDU in a TTI as illustrated in Figure 6.

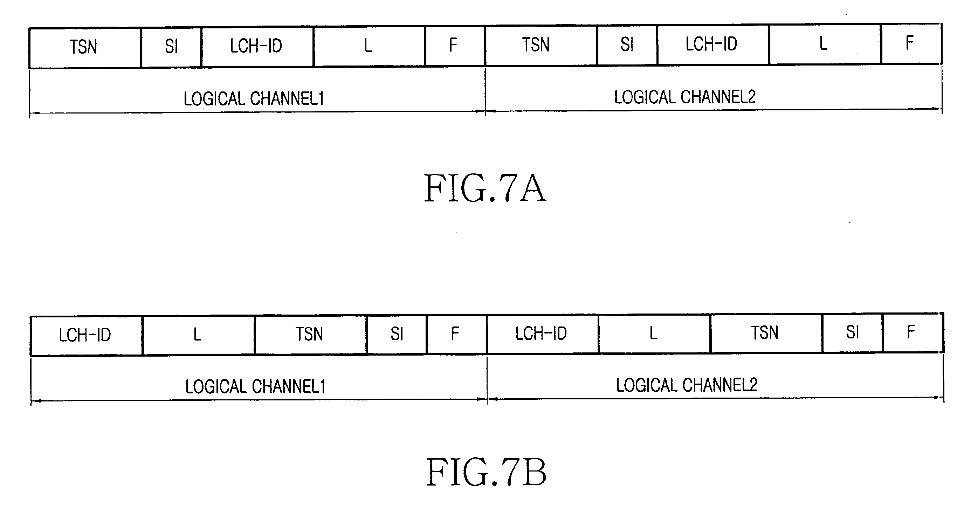

Alternatively, it is also possible to order the header fields of a MAC-i as illustrated in FIG. 7A and FIG. 7B, such that the definition of the F field is altered as shown in Table 5 below.

**Table 5**

| F | Interpretation |
|---|---|
| 0 | The 'F' field is followed by LCH-ID and L fields and possibly TSN and SI fields |
| 1 | The 'F' field is followed by a MAC-is PDU (i.e. single / multiple MAC-is SDUs) |

More specifically, FIG. 7A illustrates an alternative header format for a MAC-i in accordance with an embodiment of the present invention. The header of MAC-i includes logical channels, i.e., Logical Channel 1 and Logical Channel 2, wherein each logical channel includes TSN, SI, LCH-ID, L, and F fields.

FIG. 7B illustrates another alternative header format for a MAC-i in accordance with an embodiment of the present invention. The header of MAC-i also includes logical channels, i.e., Logical Channel 1 and Logical Channel 2, wherein each logical channel includes LCH-ID, L, TSN, SI, and F fields. The TSN and the SI fields of the MAC-is header and the MAC-is PDU include only MAC-is SDUs. Also, the presence of the TSNᵢ and SIᵢ fields are based on the value of the LCH-IDᵢ, and if the LCH-IDᵢ is the same as LCH-IDᵢ₋₁, there is no TSNᵢ or SIᵢ field and it is noted that the TSN₁ and Sl₁ fields are always present. In other words, a separate TSN or SI field may not be present for the same LCH-ID, and if one or more LCH-IDs are present, one TSN field and one SI field have to be present.

It is also possible that the network does not provide a list of sizes to the UE. In such a case, the size of the PDUs needs to be signaled in-band, which can reduce the range of values of the PDU size for which the optimization can be applied. However, because the optimization brings maximum gains for small size PDUs, it should be fine in most of the cases. The alternative coding of the L field could be as shown below in Table 6 and Table 7, respectively. For both of these alternatives, the first two bits of the L field is set to '11' to indicate that the remaining 9 bits of the L field are to be interpreted differently.

**Table 6**

| | |
|---|---|
| Size of the MAC-is SDUs (6 bits) | Number of MAC-is SDUs (3 bits) |

**Table 7**

| | |
|---|---|
| Size of the MAC-is SDUs (7 bits) | Number of MAC-is SDUs (2 bits) |

Further, the interpretation can be achieved by setting the two Most Significant Bits (MSBs) of the L field to '11'. The variable index can be known as Service IDentifier (SID) field and the variable number can be known as N field. The value of SID and the value of N can be interpreted as shown below in Table 8 and Table 9, respectively.

**Table 8**

| SID | MRPS Entry |
|---|---|
| 0 | First |
| 1 | Second |
| 2 | Third |
| 3 | Fourth |
| 4 | Fifth |
| 5 | Sixth |
| 6 | Seventh |
| 7 | Eighth |

**Table 9**

| N | Number of PDUs |
|---|---|
| 0 | 2 |
| 1 | 3 |
| 2 | 4 |
| ... | ... |
| ... | ... |
| 61 | 63 |
| 62 | 64 |
| 63 | 65 |

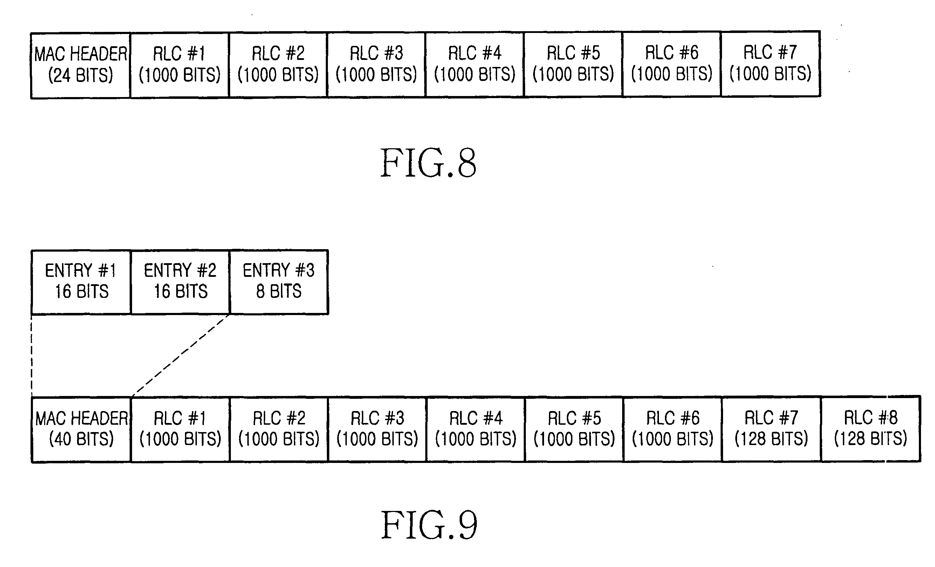

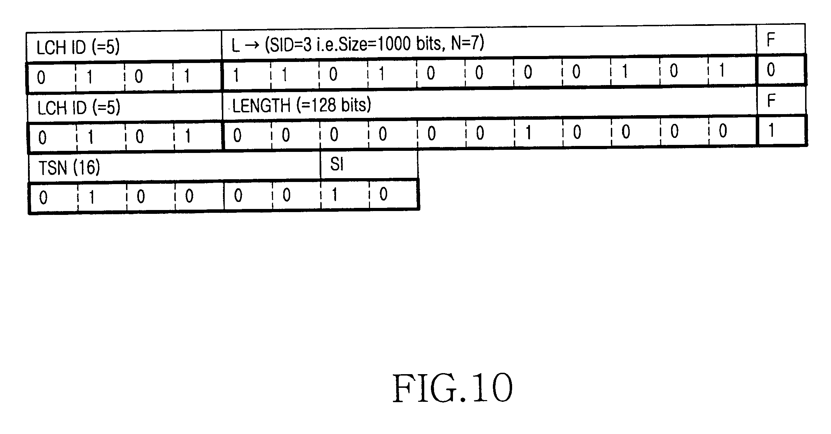

Using the same example described in the background, assuming that the MRPS is configured to be 1000, i.e., the 3^{rd} entry in the MRPS list is 1000 bits, the resulting header, after the optimizations, wherein the optimization for the MAC-i/is PDU structure is as illustrated in FIG. 8 have been performed, will be as illustrated in FIG. 10.

Referring to FIG. 10, the total header overhead has come down from 168 bits (for 7000 bits of data) to 40 bits (for 7128 bits of data), i.e., a reduction of ∼1.8%, as illustrated in FIG. 9, which illustrates the resulting MAC-i PDU structure.

Additionally, the choice of a MAC-i PDU size is dependent on the instantaneous radio conditions. Consequently, the size of the contained MAC-is PDUs is also dependent on the instantaneous radio conditions.

In a radio-aware implementation of RLC protocol, the size of RLC PDUs is also dependent on the instantaneous radio conditions. However, the radio-unaware implementations work with flexible RLC PDU sizes up to an MRPS. When the network provides a list of MRPSs to the UEs, the UE with a radio-aware RLC is expected to work with different MRPSs depending on the radio conditions. However, a UE with radio-unaware RLC may choose to work with a single MRPS. The MRPS might be either the maximum or the minimum or somewhere in between or randomly selected from the provided list. The network does not have any mechanism to influence what the UE may select and therefore, it has to work with conservative estimates resulting into loss of efficiency. To address this problem, it is proposed to specify one of the MRPSs as a default MRPS, which can be used by UEs that do not adapt their MRPS according to radio conditions. Therefore, the list of MRPSs provided by the network is shown below in the Table 10, wherein the first entry in Table 10 of index 0 can be treated as the default value of the MRPS and the entries corresponding to indices 6 and 7 are empty indicating that there are only 6 MRPSs.

**Table 10**

| Index | Maximum RLC PDU Size |
|---|---|
| 0 | 960 |
| 1 | 320 |
| 2 | 480 |
| 3 | 640 |
| 4 | 1280 |
| 5 | 1600 |
| 6 | - |
| 7 | - |

Generally, the length of the L field is 11 bits. Therefore, assuming that '00000000000' (all zeros) indicates a length of 0 octet (special usage); the L values can range from 0 to 2047 octets. The expected RLC PDU sizes range from a few hundreds to a few thousands bits. Therefore, an RLC PDU size of 16384 bits (2048 octets) is virtually impossible. It can be argued that the maximum length of the RLC PDU will not exceed the typical maximum RLC SDU size of 1500 octets. Thus, the actually required range for the L field is (00000000000 - 10111011100). Therefore, the range (11000000000 - 11111111111) can be safely reserved for some different purpose than indicating the value of the L field. The alternative interpretation of the 11-bits of L field will depend on the value of the two most significant bits in it. The interpretation mechanism can be described as shown below in the Table 11.

**Table 11**

| Two MSBs of L field | Interpretation |
|---|---|
| 00-10 | Length of the MAC-is SDU is equal to (1 + L) octets |
| 11 | Rest 9 bits of the L field to be interpreted differently |

As there is a possibility of having many RLC PDUs of same size in a single MAC-is PDU, as an optimization, it is better to indicate the length and number of these RLC PDUs by a single L entry. It is expected that the size described is the same as the MRPS for the logical channel. Moreover, it is also expected that the MRPS for a logical channel is not a random number.

It is proposed that the network shall provide a list of MRPSs to the UE and the UE can choose the optimum value from the list based on, e.g., radio conditions. Because the size used is equal to MRPS and there is a limited set of values MRPS can attain, the size of the RLC PDUs can be indicated by an index rather than explicitly indicated therein. Therefore, all the RLC PDUs can be indicated using a (size, number) pair which shall be accommodated in the 9 available bits as described below. It should be noted that the actual size of MRPS index and number fields may vary depending upon the protocol requirements and characteristics. For example, there may be only 4 MRPS indices with the number of RLC PDUs going up to 128. In such a case, the MRPS index may be 2-bits long and number field can be 7-bits long.

| | |
|---|---|
| MRPS Index (3 bits) | Number of PDUs of size = MRPS (6bits) I |

In general, the large sized RLC SDU is segmented into many MAC i/is PDUs, the size of which does not exceed the MRPS. The RLC PDUs of same size is indicated by a single L entry. The RLC PDUs are indicated by a (size, number) pair in the L (length) entry. Single SI and TSN fields are required for all MAC SDUs, which belong to a single LCH. However, the LCH-ID and L fields can be repeated for each MAC SDUs, and all these together constitute the MAC-i/is header. Also, as described above, it is proposed to provide a default MRPS value rather than selecting an estimated value from the set of MRPS.

It is advantageous that the various embodiments of the present invention provide methods for data transfer over an E-DCH with a flexible size RLC and support for MAC segmentation. Further, the various embodiments of the present invention reduce the header overheads in the L2 by avoiding unnecessary repetition of header entries and the efficiency is improved by setting default value for MRPS. Furthermore, the various embodiments of the present invention have the ability to avoid two sets of configurations for radio-aware and radio-unaware RLC implementations.

While the present invention has been shown and described with reference to certain embodiments thereof, it will be understood by those skilled in the art that various changes in form and details may be made therein without departing from the spirit and scope of the present invention. Therefore, the present invention must be defined not by described embodiments thereof but by the appended claims and any equivalents thereof.

## Claims

1. A method for enhancing Layer 2 for High Speed Packet Access uplink, comprising:
segmenting a Radio Link Control (RLC) Service Data Unit (SDU) into plurality of RLC Packet Data Units (PDUs), a size of which is limited to a Maximum RLC PDU Size (MRPS);
indicating RLC PDUs of a same size by a single Length (L) entry in header for Medium Access Control (MAC) i/is PDU; and
indicating the RLC PDUs by a (size, number) pair in the L entry.

2. The method of claim 1, further comprising providing a default MRPS value.

3. The method of claim 1, wherein a single Segmentation Indicator (SI) field is used for all the RLC- PDUs belonging to a single logical channel included in a MAC-i PDU.

4. The method of claim 1, wherein a single Transmission Sequence Number (TSN) is used for all the RLC- PDUs belonging to a single logical channel included in a MAC-i PDU.

5. The method of claim 1, wherein Transmission Sequence Number (TSN) and Segmentation Indicator (SI) fields are included in a MAC-is header including a single MAC-is PDU per logical channel per Transmission Time Interval (TTI).

6. The method of claim 1, wherein a Logical CHannel IDentity (LCH-ID) and L fields are repeated for each RLC- PDU.

7. The method of claim 1, wherein a MAC-I header includes a Logical CHannel IDentity (LCH-ID), a Length (L) Field, and a Flag (F) field.

8. The method of claim 1, wherein the L field is used as the (index, number) pair if multiple RLC- PDUs of a same size belonging to a same logical channel are included in one of the MAC-i PDUs in a Transmission Time Interval (TTI).

9. The method of 8, wherein a special value '11' of first two bits of the L field indicates that 9 following bits are to be interpreted as the (index, number) pair.

10. The method of claim 9, wherein a size of the index field is n1 bits and a size of number field is n2 bits, such that they satisfy n1 + n2 = 9.

11. A data transmission method of Layer 2 (L2) for a High Speed Packet Access (HSPA) uplink, the data transmission method comprising:
segmenting a Radio Link Control (RLC) Service Data Unit (SDU) into plurality of RLC Packet Data Units (PDUs) having a Maximum RLC PDU Size (MRPS); and
indicating the number of one or more RLC PDUs belonging to the same logical channel among the plurality of RLC PDUs and the MRPS information by a single length field in a header of a Medium Access Control (MAC)-i PDU for transmitting the one or more RLC PDUs.

12. The data transmission method of claim 11, wherein the header of the MAC-i PDU further comprises a Logical CHannel IDentity (LCH-ID) field indicating an identifier of the same logical channel, a Transmission Sequence Number (TSN) field indicating the TSN applied to the one or more RLC PDU, and a Segmentation Indicator (SI) field indicating the SI.

13. The data transmission method of claim 12, wherein the MRPS information included in the length field is an index indicating a value of the MRPS.

14. The data transmission method of claim 13, wherein if first n bits of the length field have a specific value, the remaining bits are interpreted as the index and the number of one or more RLC PDUs.

15. The data transmission method of claim 11, wherein a default value is set for the MRPS.
